# EUROPEAN PATENT APPLICATION

(11) **EP 4 733 946 A1**
(43) Date of publication of application: **29.04.2026**
(21) Application number: 24841950.9
(22) Date of filing: 13.03.2024
(51) Int. Cl.: G06F 12/02

(54) **GARBAGE COLLECTION METHOD AND APPARATUS**

(30) Priority: 17.07.2023 CN 202310876345; 23.10.2023 CN 202311377544
(71) Applicant: Huawei Cloud Computing Technologies Co., Ltd., Guiyang, Guizhou, 550025 (CN)
(72) Inventor: WANG, Yuheng, Guiyang, Guizhou 550025 (CN); SUN, Xuyan, Guiyang, Guizhou 550025 (CN); YANG, Songlin, Guiyang, Guizhou 550025 (CN)
(74) Representative: Goddar, Heinz J.
(86) International application number: PCT/CN2024/081469
(87) International publication number: WO 2025/015947

(57) **Abstract**

This application relates to the field of storage technologies, and discloses a garbage collection method and apparatus. In the method, a client of a distributed storage system may send a garbage collection request to a server of the distributed storage system. The server may determine, based on the garbage collection request, that a target unit data block is a valid data block, and send a move command to a storage device storing the target unit data block, to cause the storage device to move the target unit data block from a first storage position to a second storage position. As a server moves data between storage positions of storage devices accessed by the server, instead of a client moving data between servers, network bandwidth between the client and the server is reduced. In addition, as a storage device performs a move operation, instead of CPUs of the client and the server performing a move operation, CPU overheads between the client and the server are reduced, and garbage collection efficiency is improved.

## Description

### CROSS-REFERENCE TO RELATED APPLICATIONS

This application claims priorities to Chinese Patent Application No. 202310876345.2, filed with the China National Intellectual Property Administration on July 17, 2023 and entitled "GARBAGE COLLECTION METHOD, APPARATUS, AND ANOTHER DEVICE", and to Chinese Patent Application No. 202311377544.5, filed with the China National Intellectual Property Administration on October 23, 2023 and entitled "GARBAGE COLLECTION METHOD AND APPARATUS", both of which are incorporated herein by reference in their entireties.

### TECHNICAL FIELD

This application relates to the field of storage technologies, and in particular, to a garbage collection method and apparatus.

### BACKGROUND

A garbage collection (garbage collection, GC) operation is an operation of reclaiming used storage space when available storage space in storage space is small. In a distributed storage system, the GC operation is usually performed by a client. For example, the client stores a mapping relationship between a data block and each storage device accessed by each server. When performing the garbage collection operation, after determining that a data block stored in a storage device accessed by a server is a valid data block, the client sends a read request to the server, to read the valid data block stored in the storage device accessed by the server. After the valid data block is read by the client, the server sets the storage device as an available storage device. The client aggregates all valid data blocks that are read, and then scatters and writes the data blocks into storage devices accessed by servers.

However, when the client performs the garbage collection operation, cross-server data movement usually occurs. Consequently, network bandwidth overheads between the client and the server are high, affecting garbage collection efficiency. In addition, during data movement, central processing units (central processing unit, CPU) of the client and the server are usually required to participate in reading and writing. Consequently, CPU overheads of the client and the server are high, also affecting the garbage collection efficiency.

### SUMMARY

Embodiments of this application provide a garbage collection method and apparatus, to improve garbage collection efficiency.

According to a first aspect, an embodiment of this application provides a garbage collection method, where the method may be applied to a server of a distributed storage system, and the server is configured to access at least one storage device. The method includes: receiving a garbage collection request from a client of the distributed storage system, where the garbage collection request carries a target unit data block, and the target unit data block is a valid data block. The server may determine that the target unit data block is located at a first storage position in a first storage device, where the first storage device is a storage device of the at least one storage device. The server may determine a second storage position, where the second storage position is a vacant position of the at least one storage device. The server may send a first move command to the first storage device, where the first move command instructs the first storage device to move the target unit data block from the first storage position to the second storage position.

In the foregoing solution, the client may send the garbage collection request to the server. The server may determine, based on the garbage collection request, that the target unit data block is a valid data block, and send the move command to the storage device storing the target unit data block, to cause the storage device to move the target unit data block from the first storage position to the second storage position. As the server moves data between storage positions of storage devices accessed by the server, instead of the client moving data between servers, network bandwidth overheads between the client and the server are reduced. In addition, as the storage device performs a move operation, instead of CPUs of the client and the server performing a move operation, CPU overheads between the client and the server are reduced, and garbage collection efficiency is improved.

In a possible implementation, the second storage position is located in a second storage device, and sending the first move command to the first storage device includes: sending a second move command to the first storage device, where the second move command includes an identifier of the first storage device, the first storage position, an identifier of the second storage device, the second storage position, and a length of the target unit data block. The first storage position indicates a storage position of the target unit data block in the first storage device before movement, and the second storage position indicates a storage position of the target unit data block in the second storage device after movement.

In the foregoing implementation, when the second storage position and the first storage position are storage positions of different storage devices, the server can send a cross-disk move command to the storage device that stores the target unit data block. As the storage device performs the move operation, instead of the CPUs of the client and the server performing the move operation, the CPU overheads between the client and the server are reduced, and the garbage collection efficiency is improved.

In a possible implementation, after sending the second move command to the first storage device, the method includes: updating a first mapping relationship to a second mapping relationship, where the first mapping relationship is a mapping relationship between the target unit data block and the first storage position on the first storage device, and the second mapping relationship is a mapping relationship between the target unit data block and the second storage position on the second storage device.

In the foregoing implementation, after performing data movement, the server can update the first mapping relationship between the target unit data block and the first storage position of the first storage device to the second mapping relationship between the target unit data block and the second storage position of the first storage device. In this case, after performing data movement, the server can also quickly determine the storage position of the target unit data block based on the second mapping relationship, thereby improving data reading and movement efficiency.

In a possible implementation, the second storage position is located in the first storage device, and sending the first move command to the first storage device includes: sending a third move command to the first storage device, where the third move command includes the first storage position, the second storage position, and a length of the target unit data block. The first storage position indicates a storage position of the target unit data block in the first storage device before movement, and the second storage position indicates a storage position of the target unit data block in the first storage device after movement.

In the foregoing implementation, when the second storage position and the first storage position are storage positions of the same storage device, the server can send an intra-disk move command to the storage device that stores the target unit data block. As the storage device performs the move operation, instead of the CPUs of the client and the server performing the move operation, the CPU overheads between the client and the server are reduced, and the garbage collection efficiency is improved.

In a possible implementation, after sending the third move command to the first storage device, the method includes: updating a first mapping relationship to a third mapping relationship, where the first mapping relationship is a mapping relationship between the target unit data block and the first storage position on the first storage device, and the third mapping relationship is a mapping relationship between the target unit data block and the second storage position on the first storage device.

In the foregoing implementation, after performing data movement, the server can update the first mapping relationship between the target unit data block and the first storage position of the first storage device to the third mapping relationship between the target unit data block and the second storage position of the second storage device. In this case, after performing data movement, the server can also quickly determine the storage position of the target unit data block based on the third mapping relationship, thereby improving data reading and movement efficiency.

In a possible implementation, the at least one storage device is a solid state drive (solid state drive, SSD). Sending the first move command to the first storage device includes: sending the first move command to the first storage device through a non-volatile memory express (non-volatile memory express, NVMe) protocol, where the first move command instructs a controller of the first storage device to move the target unit data block from the first storage position to the second storage position.

In the foregoing implementation, when the storage device is an SSD, the server can send the move command to the controller of the storage device through the NVMe protocol, to cause the controller of the storage device to perform the move operation. As the CPUs of the client and the server do not perform the move operation, the CPU overheads between the client and the server are reduced, and the garbage collection efficiency is improved.

According to a second aspect, an embodiment of this application further provides a garbage collection apparatus, where the apparatus may be used in a server of a distributed storage system, and the server is configured to access at least one storage device. The apparatus has a function of implementing the method described in the foregoing first aspect or any one of the possible designs of the foregoing first aspect. The function may be implemented by hardware, or may be implemented by hardware by executing corresponding software. The hardware or software includes one or more modules or units corresponding to the foregoing function, for example, includes a communication module and a processing module.

The communication module is configured to receive a garbage collection request from a client of the distributed storage system, where the garbage collection request carries a target unit data block, and the target unit data block is a valid data block.

The processing module is configured to: determine that the target unit data block is located at a first storage position in a first storage device, where the first storage device is a storage device of the at least one storage device; and determine a second storage position, where the second storage position is a vacant position of the at least one storage device.

The communication module is further configured to send a first move command to the first storage device, where the first move command instructs the first storage device to move the target unit data block from the first storage position to the second storage position.

In a possible implementation, the second storage position is located in a second storage device, and the communication module is specifically configured to: send a second move command to the first storage device, where the second move command includes an identifier of the first storage device, the first storage position, an identifier of the second storage device, the second storage position, and a length of the target unit data block. The first storage position indicates a storage position of the target unit data block in the first storage device before movement, and the second storage position indicates a storage position of the target unit data block in the second storage device after movement.

In a possible implementation, the processing module is further configured to: update a first mapping relationship to a second mapping relationship, where the first mapping relationship is a mapping relationship between the target unit data block and the first storage position on the first storage device, and the second mapping relationship is a mapping relationship between the target unit data block and the second storage position on the second storage device.

In a possible implementation, the second storage position is located in the first storage device, and the communication module is specifically configured to: send a third move command to the first storage device, where the third move command includes the first storage position, the second storage position, and a length of the target unit data block. The first storage position indicates a storage position of the target unit data block in the first storage device before movement, and the second storage position indicates a storage position of the target unit data block in the first storage device after movement.

In a possible implementation, the processing module is further configured to: update a first mapping relationship to a third mapping relationship, where the first mapping relationship is a mapping relationship between the target unit data block and the first storage position on the first storage device, and the third mapping relationship is a mapping relationship between the target unit data block and the second storage position on the first storage device.

In a possible implementation, the at least one storage device is an SSD, and the communication module is specifically configured to: send the first move command to the first storage device through an NVMe protocol, where the first move command instructs a controller of the first storage device to move the target unit data block from the first storage position to the second storage position.

According to a third aspect, an embodiment of this application further provides a computing device cluster, including at least one computing device. A structure of each computing device includes a processor and a memory. The processor is configured to support a server in performing the method described in the foregoing first aspect or any one of the possible designs of the foregoing first aspect. The memory is coupled to the processor, and stores program instructions and data that are necessary for a communication apparatus. The communication apparatus may further include a communication interface, configured to communicate with another device.

According to a fourth aspect, an embodiment of this application further provides a computer-readable storage medium, where the computer-readable storage medium includes computer program instructions. When the computer program instructions are performed by a computing device cluster, the computing device cluster is caused to perform the method described in the foregoing first aspect or any one of the possible designs of the foregoing first aspect.

According to a fifth aspect, an embodiment of this application further provides a computer program product including instructions. When the instructions are run by a computing device cluster, the computing device cluster is caused to perform the method described in the foregoing first aspect or any one of the possible designs of the foregoing first aspect.

According to a sixth aspect, an embodiment of this application further provides a chip. The chip may be coupled to a memory, and is configured to invoke a computer program stored in the memory and perform the method described in the foregoing first aspect or any one of the possible designs of the foregoing first aspect.

For beneficial effects of the foregoing second aspect to the sixth aspect and the possible designs of the foregoing second aspect to the sixth aspect, refer to the foregoing descriptions of beneficial effects of the method in the foregoing first aspect and any one of the possible designs of the foregoing first aspect.

### BRIEF DESCRIPTION OF DRAWINGS

FIG. 1 is a diagram of a distributed storage system;
FIG. 2 is a diagram of a garbage collection scenario;
FIG. 3 is a schematic flowchart of a garbage collection method;
FIG. 4 is a diagram of another garbage collection scenario;
FIG. 5 is a diagram of still another garbage collection scenario;
FIG. 6 is a diagram of a structure of an SSD;
FIG. 7 is a diagram of a structure of a computing device;
FIG. 8 is a diagram of a structure of a computing device cluster; and
FIG. 9 is a diagram of a connection manner between computing device clusters.

### DESCRIPTION OF EMBODIMENTS

Embodiments of this application provide a garbage collection method and apparatus. The method and the apparatus are based on a same concept. As problem-resolving principles of the method and the apparatus are similar, mutual reference may be made to implementations of the method and the apparatus. Repeated content is not described.

To make objectives, technical solution, and advantages of embodiments of this application clearer, the following further describes embodiments of this application in detail with reference to the accompanying drawings. In the descriptions of embodiments of this application, the term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects. In embodiments of this application, "at least one" means one or more, and "a plurality of" means two or more. In addition, it should be understood that, in the descriptions of embodiments of this application, terms such as "first" and "second" are merely used for distinguishing and description, but should not be understood as an indication or implication of relative importance, and should not be understood as an indication or implication of a sequence.

For ease of understanding, concepts related to this application are described for reference by using examples.
1. A storage system mainly includes a processor and a memory. A quantity of processors and a quantity of memories are not limited. The memory includes a memory controller and a storage unit of a non-volatile medium particle, for example, a flash memory (flash).

Optionally, the storage system may be a distributed storage system (distributed storage system, DSS).

The distributed storage system includes a client (client) and a plurality of servers (server). The client is configured to manage the servers, and the servers are configured to store data. The client in the distributed storage system is equivalent to the processor in the storage system, and the servers in the distributed storage system are equivalent to the memory in the storage system.

The server is also referred to as a storage server or a storage node, and includes a plurality of storage devices. The storage device provides physical storage space for the server, the storage device in the server is equivalent to the storage unit in the memory, and the storage device includes a plurality of storage positions. Optionally, the storage device may be a disk (disk).

The disk is a memory that stores data by using a magnetic recording technology. The disk is a main storage medium of a computer. The disk can store a large amount of binary data, and can prevent a data loss even when a power is off. A disk used in an early computer is a floppy disk (floppy Disk, FD for short), and a disk commonly used today is a hard disk (hard disk, HD for short).

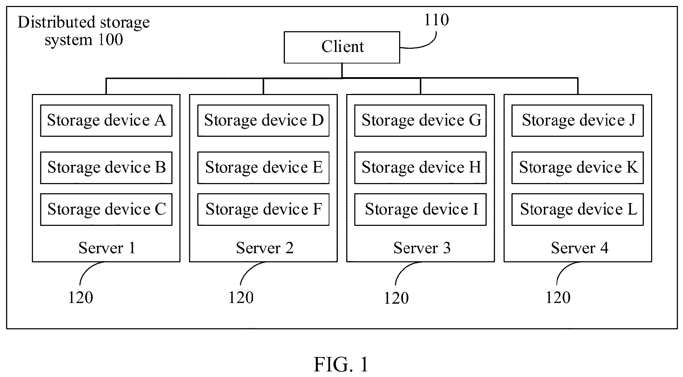

For example, FIG. 1 is a diagram of a distributed storage system. As shown in FIG. 1, a distributed storage system 100 includes a client 110 and a plurality of servers 120. In FIG. 1, an example in which the distributed storage system 100 includes four servers (which are respectively a server 1 to a server 4) is used. Each server 120 includes a plurality of storage devices. In FIG. 1, an example in which the server 1 includes three storage devices (which are respectively a storage device A to a storage device C), the server 2 includes three storage devices (which are respectively a storage device D to a storage device F), the server 3 includes three storage devices (which are respectively a storage device G to a storage device I), and the server 4 includes three storage devices (which are respectively a storage device J to a storage device L) is used.

Each storage device of the storage device A to the storage device M may be a mechanical hard disk drive (hard disk drive, HDD), an SSD, or the like. An interface of each storage device of the storage device A to the storage device M may include a serial advanced technology attachment (serial advanced technology attachment, SATA) interface, a small computer system interface (small computer system interface, SCSI), a serial attached SCSI (serial attached SCSI, SAS) interface, a fibre channel (fibre channel, FC) interface, an interface supporting an NVMe protocol, or the like.

2. Unit data block (grain): A grain is stored in a storage position of a storage device of a server in a distributed storage system.

A stripe (stripe) is also referred to as a data segment. One stripe includes a plurality of grains, and the plurality of grains are stored on a plurality of servers in a distributed manner.

3. A data processing request may be referred to as an input/output (input/output, IO) request or IO, is an IO request for short below, and is a request that is delivered by a processor in a storage system to a memory in the storage system and that instructs a memory controller of the memory to perform a data processing operation. The IO request may include at least one of a read request, a write request, and an erase request.

For example, the storage system is a distributed storage system. A client may send the IO request to a server, and the server performs a corresponding IO operation based on the received IO request. The IO operation may include at least one of a read operation, a write operation, and an erase operation.

For example, the client may send the write request to a plurality of servers, and store a plurality of grains included in one stripe on the plurality of servers in a distributed manner. Correspondingly, the server may receive the write request from the client, and store a grain indicated by the write request in a storage position of a storage device.

4. A garbage collection (garbage collection, GC) operation is an operation of reclaiming used storage space when available storage space in storage space is small. Specific operations therein include: reading valid data in a selected to-be-reclaimed storage position, moving the valid data to a target storage position in the available storage space, and then erasing all data in the to-be-reclaimed storage position, to reclaim storage space corresponding to the to-be-reclaimed storage position through the GC operation.

In a distributed storage system, the garbage collection operation is usually performed by a client. For example, the client stores a mapping relationship between a data block and each storage device of each server. When performing the garbage collection operation, after determining that a data block stored in a storage device of a server is a valid data block, the client sends a read request to the server, to read a valid data block stored in the storage device of the server. After the valid data block is read by the client, the server sets the storage device as an available storage device. The client aggregates all valid data blocks that are read, and then scatters and writes the data blocks into storage devices managed by servers.

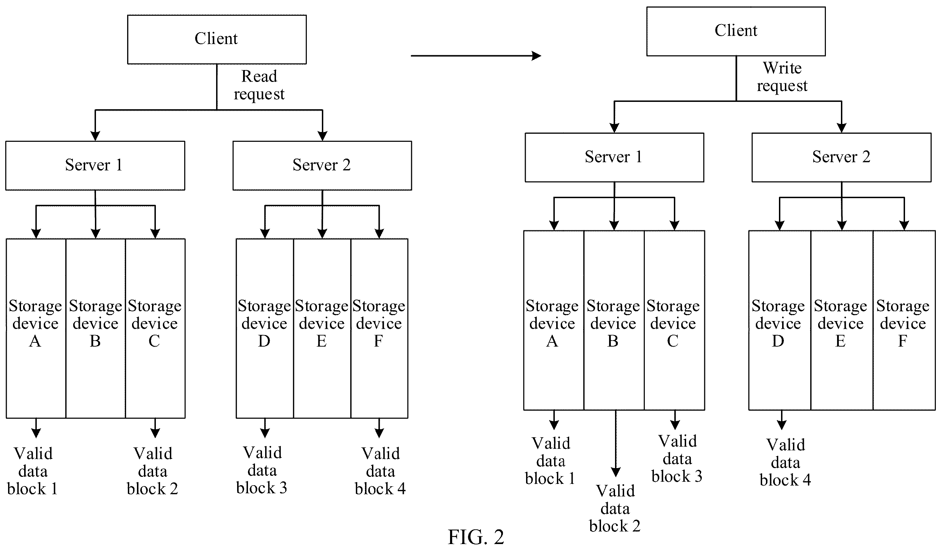

For example, FIG. 2 is a diagram of a garbage collection scenario. As shown in FIG. 2, a client sends a read request to a server 1 and a server 2, to read a valid data block 1 stored in a storage device A of the server 1, a valid data block 2 stored in a storage device C of the server 1, a valid data block 3 stored in a storage device D of the server 2, and a valid data block 4 stored in a storage device F of the server 2. The server 1 sets the storage device A and the storage device C as available storage devices, and the server 2 sets the storage device D as an available storage device. The client aggregates the previously read valid data blocks, and then scatters and writes the valid data blocks into storage devices managed by the server 1 and the server 2. For example, the client writes the valid data block 1 into the storage device A of the server 1, writes the valid data block 2 into a storage device B of the server 1, writes the valid data block 3 into the storage device C of the server 1, and writes the valid data block 4 into the storage device D of the server 2. The valid data block 2 is moved from the storage device C of the server 1 to the storage device B of the server 1, and the valid data block 4 is moved from the storage device F of the server 2 to the storage device D of the server 2, that is, the valid data block 2 and the valid data block 4 are not moved across servers. The valid data block 3 is moved from the storage device D of the server 2 to the storage device C of the server 1, that is, the valid data block 3 is moved across servers.

It can be learned that, when the client performs the garbage collection operation, cross-server data movement usually occurs. Consequently, network bandwidth overheads between the client and the server are high, affecting garbage collection efficiency. In addition, during data movement, CPUs of the client and the server are usually required to participate in reading and writing. Consequently, CPU overheads of the client and the server are high, also affecting the garbage collection efficiency.

For a problem of low garbage collection efficiency described in the foregoing content, an embodiment of this application provides a garbage collection method. In the method, a client may send a garbage collection request to a server. The server may determine, based on the garbage collection request, that a target unit data block is a valid data block, and send a move command to a storage device storing the target unit data block, to cause the storage device to move the target unit data block from a first storage position to a second storage position. As the server moves data between storage positions of storage devices accessed by the server, instead of the client moving data between servers, network bandwidth overheads between the client and the server are reduced. In addition, as the storage device performs a move operation, instead of CPUs of the client and the server performing a move operation, CPU overheads between the client and the server are reduced, and garbage collection efficiency is improved.

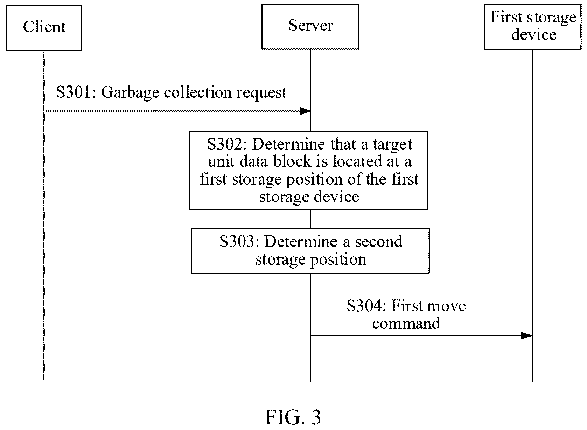

For example, FIG. 3 is a schematic flowchart of a garbage collection method. The garbage collection method may be applied to the distributed storage system shown in FIG. 1 or a distributed storage system with a function and structure similar to that in FIG. 1. This is not specifically limited in embodiments of this application. A specific procedure of the garbage collection method is described below. In the following description process, an example in which the method is applied to the distributed storage system shown in FIG. 1 is used. For example, a client described below may be the client 110 in the system shown in FIG. 1, and a server described below may be the server 120 in the system shown in FIG. 1. In this embodiment of this application, an example in which the distributed storage system is used as an execution body of the method is used for description. Alternatively, the execution body of the method may be another apparatus or system, for example, a chip, a chip system, or a processor used in the distributed storage system.

Step S301: The client sends a garbage collection request to the server. Correspondingly, the server receives the garbage collection request from the client.

In this embodiment of this application, during garbage collection, after the client determines that a target unit data block is a valid data block, the client may send the garbage collection request to the server. Correspondingly, the server receives the garbage collection request from the client. The garbage collection request is used to request the server to perform garbage collection. The garbage collection request may carry the target unit data block, and the target unit data block is a valid data block.

For example, the client may store a mapping relationship between a strip and unit data blocks shown in Table 1, and a mapping relationship between a unit data block and a server shown in Table 2.

**Table 1**

| | | | |
|---|---|---|---|
| Stripe 1 | Grain 11 | Grain 12 | Grain 13 |
| Stripe 2 | Grain 21 | Grain 22 | Grain 23 |

**Table 2**

| | |
|---|---|
| Grain 11 | Server 1 |
| Grain 12 | Server 1 |
| Grain 13 | Server 1 |
| Grain 21 | Server 2 |
| Grain 22 | Server 3 |
| Grain 23 | Server 4 |

If the client determines that the grain 11, the grain 13, the grain 21, and the grain 23 are valid data blocks, and the grain 12 and the grain 22 are invalid data blocks, the client may send a corresponding garbage collection request to each server based on the foregoing Table 2. For example, the client sends a garbage collection request 1 to the server 1, where the garbage collection request 1 carries the grain 11 and the grain 13; sends a garbage collection request 2 to the server 2, where the garbage collection request 2 carries the grain 21; and sends a garbage collection request 3 to the server 3, where the garbage collection request 3 carries the grain 23.

Step S302: The server determines that the target unit data block is located at a first storage position of a first storage device of the server.

In this embodiment of this application, after the server receives the garbage collection request that carries the target unit data block from the client, the server may determine, based on a mapping relationship between a unit data block and a storage position of a storage device, that the target unit data block is located in the first storage position of the first storage device of the server. The first storage device may be one of at least one storage device of the server.

For example, the server 1 may store a mapping relationship between a unit data block and a storage position of a storage device shown in Table 3.

**Table 3**

| | |
|---|---|
| Grain 11 | Storage device A, storage position 10 |
| Grain 12 | Storage device B, storage position 20 |
| Grain 13 | Storage device C, storage position 30 |

If the server 1 receives the garbage collection request 1 from the client, and the garbage collection request 1 carries the grain 11 and the grain 13, that is, the grain 11 and the grain 13 are valid data blocks, the server 1 may determine, based on the foregoing Table 3, that the valid data block grain 11 is located at the storage position 10 of the storage device A of the server 1, the invalid data block grain 12 is located at the storage position 20 of the storage device B of the server 1, and the valid data block grain 13 is located at the storage position 30 of the storage device C of the server 1.

Optionally, if the storage device A, the storage device B, and the storage device C are SSDs, the server 1 may store a mapping relationship between a unit data block and a storage position of a storage device shown in Table 4.

**Table 4**

| | |
|---|---|
| Grain 11 | SSD A, sector 2 |
| Grain 12 | SSD B, sector 4 |
| Grain 13 | SSD C, sector 6 |

Table 4 indicates a position at which a grain is stored on the server 1, and the position includes an SSD at which the grain is located and an offset of the grain on the SSD. For example, the grain 11 is located at the SSD A, and an offset of the grain 11 on the SSD A is a sector 2. If 16 sectors are used as one storage position, a grain 1 is located at the sector 2 to a sector 18 of an SSD 1. In other words, a start address of the storage position 10 is the sector 2, and an end address of the storage position 10 is the sector 18.

Step S303: The server determines a second storage position.

In this embodiment of this application, after the server determines that the target unit data block is located at the first storage position of the first storage device of the server, the server may determine the second storage position based on the mapping relationship between a unit data block and a storage position of a storage device. The second storage position may be any vacant position of any storage device in the at least one storage device of the server. The vacant position (also referred to as an available storage position) may be a position in which no data block is stored or no valid data block is stored (that is, an invalid data block is stored).

Optionally, the server may determine the second storage position based on a quantity of valid data blocks stored in the first storage device. Specifically, if the quantity of valid data blocks stored in the first storage device is less than a first threshold, the server may determine that the second storage position is any vacant position of the first storage device; or if the quantity of valid data blocks stored in the first storage device is greater than or equal to the first threshold, the server may determine that the second storage position is any vacant position of a second storage device. The first threshold may be a default threshold, or may be a threshold set by a user as required. This is not limited in this embodiment of this application.

Step S304: The server sends a first move command to the first storage device.

In this embodiment of this application, after the server determines the second storage position, the server may send the first move command to the first storage device. The first move command instructs the first storage device to move the target unit data block from the first storage position to the second storage position. As the first storage device performs a move operation, instead of CPUs of the client and the server performing a move operation, CPU overheads between the client and the server are reduced, and garbage collection efficiency is improved.

Specifically, if the second storage position is located in the second storage device, the server may send a second move command (also referred to as a cross-disk move command Move_Cross_Disk) to the first storage device. The second move command includes an identifier of the first storage device, the first storage position, an identifier of the second storage device, the second storage position, and the length of the target unit data block. The first storage position indicates a storage position of the target unit data block in the first storage device before movement. The second storage position indicates a storage position of the target unit data block in the second storage device after movement.

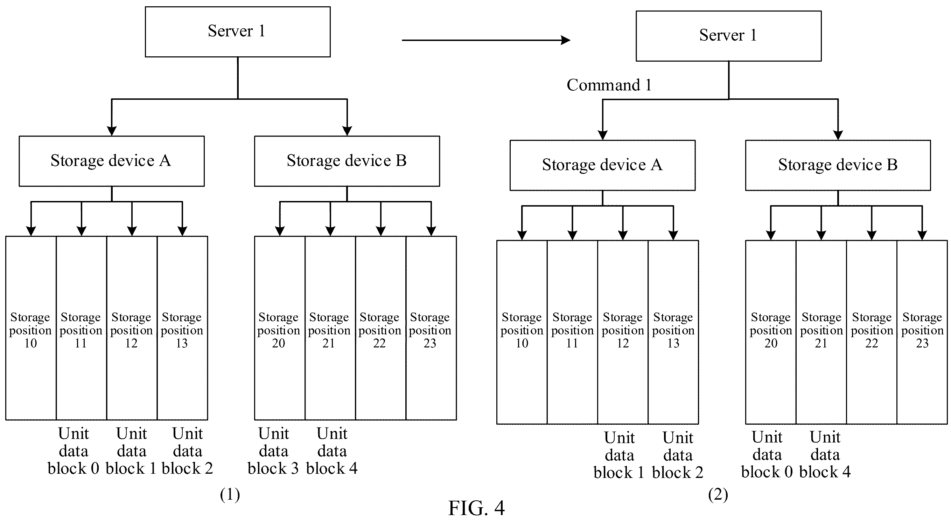

For example, FIG. 4 is a diagram of another garbage collection scenario. As shown in (1) in FIG. 4, a storage device A includes four storage positions, which are respectively a storage position 10, a storage position 11, a storage position 12, and a storage position 13. A storage device B includes four storage positions, which are respectively a storage position 20, a storage position 21, a storage position 22, and a storage position 23. If a server 1 receives a garbage collection request 1 that carries a grain 0, a grain 1, a grain 2, and a grain 4 from a client, the server 1 may determine, based on a mapping relationship between a unit data block and a storage position of a storage device shown in Table 5, that valid data blocks stored in the storage device A include: the grain 0 located at the storage position 11, the grain 1 located at the storage position 12, and the grain 2 located at the storage position 13; and a valid data block stored in the storage device B includes the grain 4 located at the storage position 21, and an invalid data block stored in the storage device B includes a grain 3 located at the storage position 20.

**Table 5**

| | |
|---|---|
| Grain 0 | Storage device A, storage position 11 |
| Grain 1 | Storage device A, storage position 12 |
| Grain 2 | Storage device A, storage position 13 |
| Grain 3 | Storage device B, storage position 20 |
| Grain 4 | Storage device B, storage position 21 |

As shown in (2) in FIG. 4, if the server 1 determines to move the grain 0 from the storage position 11 to the storage position 20, the server 1 may send a command 1 to the storage device A, so that the storage device A moves the grain 0 from the storage position 11 to the storage position 20. The command 1 is a cross-disk move command Move_Cross_Disk (diskA, offset11, diskB, offset20, len0), where diskA is an identifier of the storage device A, offset12 is a start address of the storage position 12, diskB is an identifier of the storage device B, offset20 is a start address of the storage position 20, and len0 is the length of the grain 0. After receiving the command 1, the storage device A performs cross-device movement, to move the grain 0 from the storage position 11 to the storage position 20.

After the server sends the second move command to the first storage device, the server may further update a first mapping relationship to a second mapping relationship. The first mapping relationship is a mapping relationship between the target unit data block and the first storage position on the first storage device. The second mapping relationship is a mapping relationship between the target unit data block and the second storage position on the second storage device.

For example, in the garbage collection scenario shown in FIG. 4, the server 1 sends the command 1 to the storage device A, to cause the storage device A to move the grain 0 from the storage position 11 to the storage position 20. Then, the server 1 may update the mapping relationship between a unit data block and a storage position of a storage device shown in Table 5 above, to obtain a mapping relationship between a unit data block and a storage position of a storage device shown in Table 6.

**Table 6**

| | |
|---|---|
| Grain 0 | Storage device B, storage position 20 |
| Grain 1 | Storage device A, storage position 10 |
| Grain 2 | Storage device A, storage position 11 |
| Grain 4 | Storage device B, storage position 21 |

Further, when the server 1 receives a write request from the client, the server 1 may determine, based on the foregoing Table 6, that the storage position 10 and the storage position 11 of the storage device A store valid data blocks; the storage position 12 and the storage position 13 of the storage device A store no data block or no valid data block, that is, the storage position 12 and the storage position 13 of the storage device A are vacant positions; and the storage position 20 and the storage position 21 of the storage device B store valid data blocks, and the storage position 22 and the storage position 23 of the storage device B store no data block or no valid data block, that is, the storage position 22 and the storage position 23 of the storage device B are vacant positions. Therefore, the server 1 may write a unit data block indicated by the write request to the storage position 12 of the storage device A, the storage position 13 of the storage device A, the storage position 22 of the storage device B, or the storage position 23 of the storage device B.

Specifically, if the second storage position is located in the first storage device, the server may send a third move command (also referred to as an intra-disk move command Move_In_Disk) to the first storage device. The third move command includes the first storage position, the second storage position, and the length of the target unit data block. The first storage position indicates the storage position of the target unit data block in the first storage device before movement. The second storage position indicates the storage position of the target unit data block in the first storage device after movement.

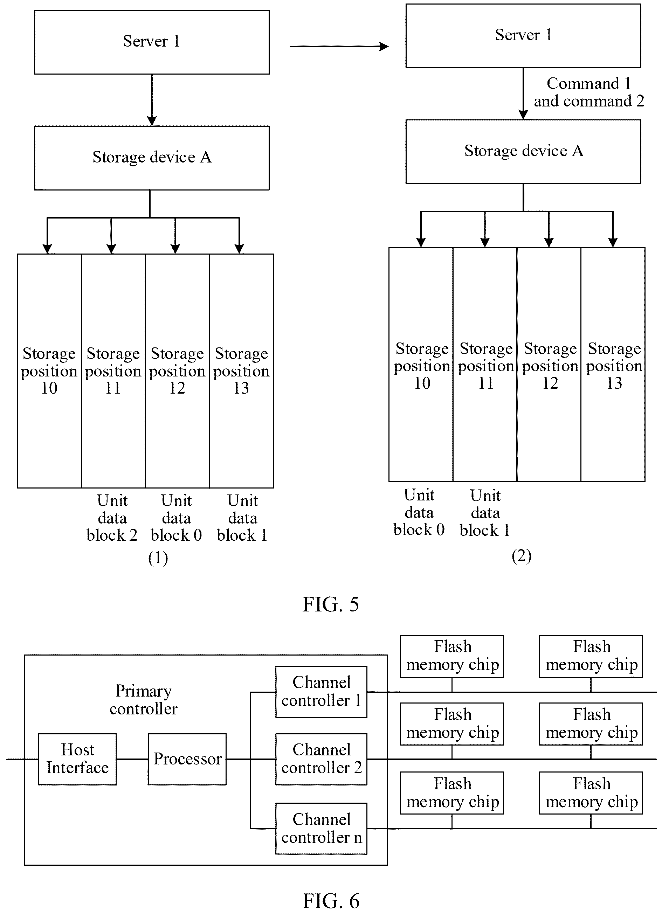

For example, FIG. 5 is a diagram of still another garbage collection scenario. As shown in (1) in FIG. 5, a storage device A includes four storage positions, which are respectively a storage position 10, a storage position 11, a storage position 12, and a storage position 13. If a server 1 receives a garbage collection request 1 that carries a grain 0 and a grain 1 from a client, the server 1 may determine, based on a mapping relationship between a unit data block and a storage position of a storage device shown in Table 7, that valid data blocks stored in the storage device A include: the grain 0 located at the storage position 12, and the grain 1 located at the storage position 13; and an invalid data block stored in the storage device A includes a grain 2 located at the storage position 11.

**Table 7**

| | |
|---|---|
| Grain 0 | Storage device A, storage position 12 |
| Grain 1 | Storage device A, storage position 13 |
| Grain 2 | Storage device A, storage position 11 |

As shown in (2) in FIG. 5, if the server 1 determines to move the grain 0 from the storage position 12 to the storage position 10, and move the grain 1 from the storage position 13 to the storage position 11, the server 1 may sequentially send a command 1 and a command 2 to the storage device A. The command 1 is an intra-disk move command Move_In_Disk (offset12, offset10, len0), where offset12 is a start address of the storage position 12, offset10 is a start address of the storage position 10, and len0 is the length of the grain 0. The command 2 is an intra-disk move command Move_In_Disk (offset13, offset11, len1), where offset13 is a start address of the storage position 13, offset11 is a start address of the storage position 11, and len1 is the length of the grain 1. After receiving the command 1 and the command 2, the storage device A sequentially performs intra-device movement, to move the grain 0 from the storage position 12 to the storage position 10, and move the grain 1 from the storage position 13 to the storage position 11.

After the server sends the third move command to the first storage device, the server may further update a first mapping relationship to a third mapping relationship. The first mapping relationship is a mapping relationship between the target unit data block and the first storage position on the first storage device. The third mapping relationship is a mapping relationship between the target unit data block and the second storage position on the first storage device.

For example, in the garbage collection scenario shown in FIG. 5, the server 1 sends the command 1 and the command 2 to the storage device A, to cause the storage device A to move the grain 0 from the storage position 12 to the storage position 10, and move the grain 1 from the storage position 13 to the storage position 11. Then, the server 1 may update the mapping relationship between a unit data block and a storage position of a storage device shown in Table 7, to obtain a mapping relationship between a unit data block and a storage position of a storage device shown in Table 8.

**Table 8**

| | |
|---|---|
| Grain 0 | Storage device A, storage position 10 |
| Grain 1 | Storage device A, storage position 11 |

Further, when the server 1 receives a write request from the client, the server 1 may determine, based on the foregoing Table 8, that the storage position 10 and the storage position 11 of the storage device A store valid data blocks; and the storage position 12 and the storage position 13 of the storage device A store no data block or no valid data block, that is, the storage position 12 and the storage position 13 of the storage device A are vacant positions. Therefore, the server 1 may write a unit data block indicated by the write request to the storage position 12 of the storage device A and the storage position 13 of the storage device A.

Optionally, if the at least one storage device of the server is an SSD, the server may send the first move command to the first storage device through an NVMe protocol. The first move command instructs a controller of the first storage device to move the target unit data block from the first storage position to the second storage position.

For example, FIG. 6 is a diagram of a structure of an SSD according to an embodiment of this application. The SSD includes a flash memory and a primary controller. The flash memory includes a plurality of flash memory chips, configured to store data. The primary controller is a brain center of the SSD, and is responsible for some complex tasks, for example, managing data storage, and maintaining performance and service life of the SSD. The primary controller is an embedded microchip, includes a processor, and functions as a command center to send all operation requests of the SSD. For example, the processor may execute functions such as reading/writing data, garbage collection, and wear leveling via firmware in a buffer. The primary controller further includes a host interface and several channel controllers. The host interface is configured to communicate with a host. The host herein can be any device, for example, a server, a personal computer, or an array controller. Via the several channel controllers, the primary controller can operate the plurality of flash memory chips in parallel, thereby improving bandwidth at a bottom layer. For example, assuming that there are eight channels between the primary controller and the flash memory, the primary controller reads and writes data to eight flash memory chips in parallel through the eight channels.

The first storage device and the second storage device may each be the SSD shown in FIG. 6, in other words, the first storage device may be an SSD 1 and the second storage device may be an SSD 2. If the second storage position is located in the second storage device, the server may send the second move command to the SSD 1 through an NVMe protocol, that is, a host interface of the SSD 1 is an NVMe interface. The second move command instructs a primary controller of the SSD 1 to move the target unit data block from a flash memory chip 1 of the SSD 1 to a flash memory chip 2 of the SSD 2. After the SSD 1 receives the second move command through the host interface of the SSD 1, the primary controller of the SSD 1 may read, via a channel controller corresponding to the flash memory chip 1, the target unit data block stored in the flash memory chip 1, and send a write request to the SSD 2 through the NVMe protocol, that is, a host interface of the SSD 2 is an NVMe interface. The write request is used to request a primary controller of the SSD 2 to write the target unit data block into the flash memory chip 2. After the SSD 2 receives the write request through the host interface of the SSD 2, the primary controller of the SSD 2 may write the target unit data block into the flash memory chip 2 via a channel controller corresponding to the flash memory chip 2.

If the second storage position is located in the first storage device, the server may send the third move command to the SSD 1 through the NVMe protocol, where the third move command instructs the primary controller of the SSD 1 to move the target unit data block from the flash memory chip 1 of the SSD 1 to a flash memory chip 3 of the SSD 1. After the SSD 1 receives the second move command through the host interface of the SSD 1, the primary controller of the SSD 1 may read, via the channel controller corresponding to the flash memory chip 1, the target unit data block stored in the flash memory chip 1, and write the target unit data block into the flash memory chip 3 via a channel controller corresponding to the flash memory chip 3.

According to the foregoing solution, the client may send the garbage collection request to the server. The server may determine, based on the garbage collection request, that the target unit data block is a valid data block, and send the move command to the storage device storing the target unit data block, to cause the storage device to move the target unit data block from the first storage position to the second storage position. As the server moves data between storage positions of storage devices accessed by the server, instead of the client moving data between servers, network bandwidth overheads between the client and the server are reduced. In addition, as the storage device performs a move operation, instead of the CPUs of the client and the server performing the move operation, the CPU overheads between the client and the server are reduced, and the garbage collection efficiency is improved.

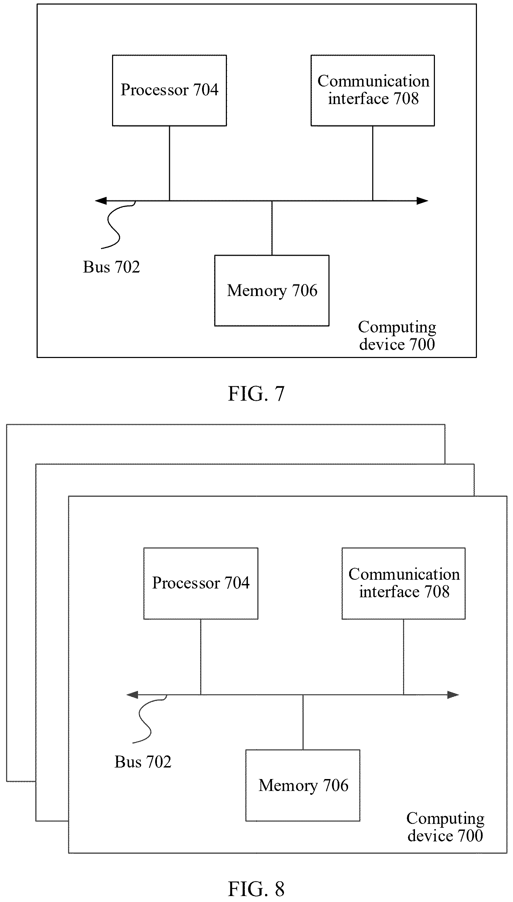

Based on the foregoing embodiments, an embodiment of this application further provides a computing device. FIG. 7 is a diagram of a structure of a computing device according to an embodiment of this application. The computing device 700 includes a bus 702, a processor 704, a memory 706, and a communication interface 708. The processor 704, the memory 706, and the communication interface 708 communicate with each other through the bus 702. The computing device 700 may be a server in a distributed storage system. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 7. However, it does not indicate that there is only one bus or only one type of bus. The bus 702 may include a path for transferring information between components (for example, the memory 706, the processor 704, and the communication interface 708) of the computing device 700.

The processor 704 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). Alternatively, the memory 706 may include a non-volatile memory (non-volatile memory), for example, a read-only memory (read-only memory, ROM), a flash memory, a hard disk drive (hard disk drive, HDD), or a solid state drive (solid state drive, SSD).

The memory 706 stores an executable program code, and the processor 704 performs the executable program code to separately implement functions of a communication module and a processing module, to implement the garbage collection method in the foregoing method embodiment. In other words, the memory 706 stores instructions for performing the garbage collection method in the foregoing method embodiment.

The communication interface 708 is a transceiver module, for example, but not limited to, a network interface card or a transceiver, to implement communication between the computing device 700 and another device or a communication network.

Based on the foregoing embodiments, an embodiment of this application further provides a computing device cluster. The computing device cluster includes at least one computing device. The computing device may be a server in a distributed storage system.

As shown in FIG. 8, the computing device cluster includes at least one computing device 700. A memory 706 in one or more computing devices 700 in the computing device cluster may store instructions same as those for performing the garbage collection method in the foregoing method embodiment.

In some possible implementations, the memory 706 in the one or more computing devices 700 in the computing device cluster may alternatively separately store a part of instructions for performing the garbage collection method in the foregoing method embodiment. In other words, a combination of the one or more computing devices 700 may jointly perform the instructions for performing the garbage collection method in the foregoing method embodiment.

It may be understood that memories 706 in different computing devices 700 in the computing device cluster may store different instructions, for performing partial functions of a server in a distributed storage system. In other words, the instructions stored in the memories 706 in different computing devices 700 may implement functions of one or both of a communication module and a processing module.

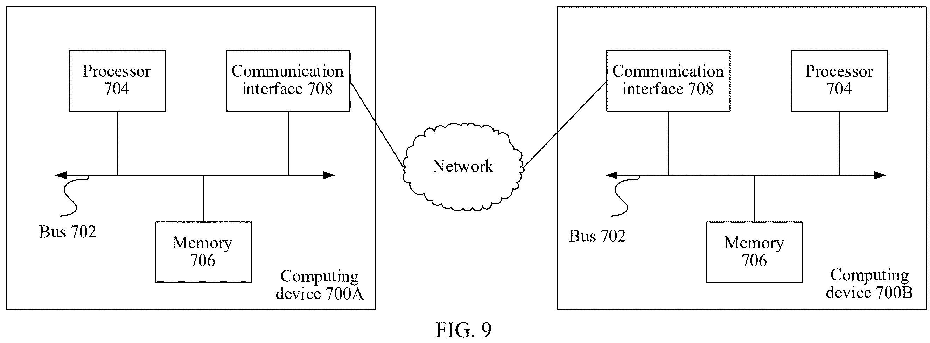

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, the computing devices are connected to the network through communication interfaces in the computing devices. In this type of possible implementation, a memory 706 in the computing device 700A stores instructions for executing a function of a communication module. In addition, a memory 706 in the computing device 700B stores instructions for executing a function of a processing module.

It should be understood that functions of the computing device 700A shown in FIG. 9 may alternatively be completed by a plurality of computing devices 700. Similarly, functions of the computing device 700B may alternatively be completed by a plurality of computing devices 700.

Based on the foregoing embodiments, an embodiment of this application further provides a computer-readable storage medium. The computer-readable storage medium may be any usable medium that can be stored by a computing device or a data storage device such as a data center that includes one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct the computing device to perform the garbage collection method in the foregoing method embodiment.

Based on the foregoing embodiments, an embodiment of this application further provides a computer program product including instructions. The computer program product may be software or a program product that includes instructions and that can run on a computing device or that is stored in any usable medium. When the computer program product runs on at least one computing device, the at least one computing device is caused to perform the garbage collection method in the foregoing method embodiment.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more procedures in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims of this application and equivalent technologies thereof.

## Claims

1. A garbage collection method, wherein the method is applied to a server of a distributed storage system, the server is configured to access at least one storage device, and the method comprises:
receiving a garbage collection request from a client of the distributed storage system, wherein the garbage collection request carries a target unit data block, and the target unit data block is a valid data block;
determining that the target unit data block is located at a first storage position in a first storage device, wherein the first storage device is a storage device of the at least one storage device;
determining a second storage position, wherein the second storage position is a vacant position of the at least one storage device; and
sending a first move command to the first storage device, wherein the first move command instructs the first storage device to move the target unit data block from the first storage position to the second storage position.

2. The method according to claim 1, wherein the second storage position is located in a second storage device, and sending the first move command to the first storage device comprises:
sending a second move command to the first storage device, wherein the second move command comprises an identifier of the first storage device, the first storage position, an identifier of the second storage device, the second storage position, and a length of the target unit data block; and the first storage position indicates a storage position of the target unit data block in the first storage device before movement, and the second storage position indicates a storage position of the target unit data block in the second storage device after movement.

3. The method according to claim 2, wherein after sending the second move command to the first storage device, the method comprises:
updating a first mapping relationship to a second mapping relationship, wherein the first mapping relationship is a mapping relationship between the target unit data block and the first storage position on the first storage device, and the second mapping relationship is a mapping relationship between the target unit data block and the second storage position on the second storage device.

4. The method according to claim 1, wherein the second storage position is located in the first storage device, and sending the first move command to the first storage device comprises:
sending a third move command to the first storage device, wherein the third move command comprises the first storage position, the second storage position, and a length of the target unit data block; and the first storage position indicates a storage position of the target unit data block in the first storage device before movement, and the second storage position indicates a storage position of the target unit data block in the first storage device after movement.

5. The method according to claim 4, wherein after sending the third move command to the first storage device, the method comprises:
updating a first mapping relationship to a third mapping relationship, wherein the first mapping relationship is a mapping relationship between the target unit data block and the first storage position on the first storage device, and the third mapping relationship is a mapping relationship between the target unit data block and the second storage position on the first storage device.

6. The method according to claim 1, wherein the at least one storage device is a solid state drive SSD, and sending the first move command to the first storage device comprises:
sending the first move command to the first storage device through a non-volatile memory express NVMe protocol, wherein the first move command instructs a controller of the first storage device to move the target unit data block from the first storage position to the second storage position.

7. A garbage collection apparatus, wherein the apparatus is used in a server of a distributed storage system, the server is configured to access at least one storage device, and the apparatus comprises:
a communication module, configured to receive a garbage collection request from a client of the distributed storage system, wherein the garbage collection request carries a target unit data block, and the target unit data block is a valid data block; and
a processing module, configured to: determine that the target unit data block is located at a first storage position in a first storage device, wherein the first storage device is a storage device of the at least one storage device; and determine a second storage position, wherein the second storage position is a vacant position of the at least one storage device, wherein
the communication module is further configured to send a first move command to the first storage device, wherein the first move command instructs the first storage device to move the target unit data block from the first storage position to the second storage position.

8. The apparatus according to claim 7, wherein the second storage position is located in a second storage device, and the communication module is specifically configured to:
send a second move command to the first storage device, wherein the second move command comprises an identifier of the first storage device, the first storage position, an identifier of the second storage device, the second storage position, and a length of the target unit data block; and the first storage position indicates a storage position of the target unit data block in the first storage device before movement, and the second storage position indicates a storage position of the target unit data block in the second storage device after movement.

9. The apparatus according to claim 8, wherein the processing module is further configured to:
update a first mapping relationship to a second mapping relationship, wherein the first mapping relationship is a mapping relationship between the target unit data block and the first storage position on the first storage device, and the second mapping relationship is a mapping relationship between the target unit data block and the second storage position on the second storage device.

10. The apparatus according to claim 7, wherein the second storage position is located in the first storage device, and the communication module is specifically configured to:
send a third move command to the first storage device, wherein the third move command comprises the first storage position, the second storage position, and a length of the target unit data block; and the first storage position indicates a storage position of the target unit data block in the first storage device before movement, and the second storage position indicates a storage position of the target unit data block in the first storage device after movement.

11. The apparatus according to claim 10, wherein the processing module is further configured to:
update a first mapping relationship to a third mapping relationship, wherein the first mapping relationship is a mapping relationship between the target unit data block and the first storage position on the first storage device, and the third mapping relationship is a mapping relationship between the target unit data block and the second storage position on the first storage device.

12. The apparatus according to claim 7, wherein the at least one storage device is an SSD, and the communication module is specifically configured to:
send the first move command to the first storage device through an NVMe protocol, wherein the first move command instructs a controller of the first storage device to move the target unit data block from the first storage position to the second storage position.

13. A computing device cluster, wherein the computing device cluster comprises at least one computing device, each computing device comprises a processor and a memory, and the memory in the at least one computing device is configured to store computer program instructions; and
a processor in the at least one computing device invokes the computer program instructions stored in the memory, to perform the method according to any one of claims 1 to 6.

14. A computer-readable storage medium, comprising computer program instructions, wherein when the computer program instructions are performed by a computing device, the computing device performs the method according to any one of claims 1 to 6.

15. A computer program product comprising instructions, wherein when the instructions are run by a computing device, the computing device is caused to perform the method according to any one of claims 1 to 6.
